# EUROPÄISCHE PATENTSCHRIFT

(11) **EP 0 360 952 B1**
(45) Veröffentlichungstag und Bekanntmachung des Hinweises auf die Patenterteilung: **03.11.1993**
(21) Anmeldenummer: 89101834.3
(22) Anmeldetag: 02.02.1989
(51) Int. Cl.: G05B 19/04

(54) **Vorrichtung zur Erzeugung und Steuerung von Meldesignalen**
Device for creation and control of indication signals
Dispositif pour capter et commander des signaux indicatifs

(30) Priorität: 29.09.1988 AT 2409/88
(43) Veröffentlichungstag der Anmeldung: 04.04.1990
(73) Patentinhaber: Siemens Aktiengesellschaft Österreich, 1210 Wien (AT)
(72) Erfinder: Müllner, Thomas, A-1110 Wien (AT); Schneider, Hans-Peter, Dipl.-Ing., D-8551 Gremsdorf (DE)
(74) Vertreter: Matschnig, Franz, Dipl.-Ing.

(56) Entgegenhaltungen:
- EP-A- 0 273 322
- US-A- 4 001 557
- PATENT ABSTRACTS OF JAPAN vol. 8, no. 105 (P-274)(1542) 17 Mai 1984;& JP-A-59 16029

## Beschreibung

Die Erfindung betrifft eine Vorrichtung zur Erzeugung und Steuerung von Meldesignalen für mindestens eine Ein- und Ausschaltroutine mit mindestens einem die Dauer der Meldesignale steuernden Zeitglied, wobei der Meldesignalerzeuger mit einer Stromversorgungseinrichtung und über Meldeleitungen mit einem von der Stromversorgungseinrichtung zu versorgenden Gerät verbunden ist.

Von einer derartigen Vorrichtung werden Meldesignale in einer, beim Ein- und Ausschalten unterschiedlichen, vom zu versorgenden Gerät abhängigen Zeitfolge geliefert. Diese Meldesignale zeigen vorhandene Spannung bei Spannungsausfall bzw. Spannungszuschalten an. Die Versorgungsspannung wird von Meßvorrichtungen der Stromversorgungseinrichtung überwacht. Das zu versorgende Gerät, beispielsweise ein Rechner, wird so vor Beschädigungen durch Spannungsschwankungen geschützt.

Zum Aufbau obiger Vorrichtung werden flankengetriggerte Zeitglieder (Mono-Flip-Flops) verwendet. Aus Genauigkeitsgründen müssen dabei Bauteile verwendet werden, deren technische Daten keine größeren Schwankungen aufweisen dürfen. Infolge der Flankentriggerung weisen die Zeitglieder auch eine geringe Störsicherheit auf. Eine Änderung der Zeitfolge ist nur durch neue Beschaltung möglich.

Der Erfindung liegt die Aufgabe zugrunde, eine flexible Änderung der Ein- und Ausschaltroutinen zu ermöglichen.

Dies wird gemäß Patentanspruch 1 dadurch erreicht, daß der Meldesignalerzeuger einen Zähler enthält, der mit einem Speicherelement verbunden ist, das die Abfolge der Meldesignale für die Ein- und Ausschaltroutine enthält und Ausgänge umfaßt, an die die Meldeleitungen angeschlossen sind, daß dem Zähler eine Ein/Ausschaltsteuerung über eine Start/Stoppleitung vorgeschaltet ist und daß der Zähler und das Speicherelement mit einem gemeinsamen Taktgeber mit Oszillator als Zeitglied verbunden sind.

Für die Genauigkeit der Zeitfolge ist jetzt der Takt des Zählers verantwortlich, und es ist nur noch ein genaues Zeitglied notwendig. Der Taktgeber bestimmt die Dauer der einzelnen Zählerschritte. Eine Änderung der Signaldauer und -folge wird durch eine Änderung des Inhalts des Speicherelementes erreicht. Diese Daten werden mit Hilfe des Zählers ausgelesen. Er startet und steuert nach seiner Freigabe die Ein- bzw. Ausschaltroutine. Mach dem Ablauf jeder Routine wird der Zähler gesperrt, nach der Ausschaltroutine rückgesetzt. Da der Zähler somit nur während des Spannungszuschaltens bzw. Spannungsausfalles aktiviert ist, befindet er sich während des Normalbetriebs der Stromversorgung in einem stationären Zustand. Er ist gesperrt und es liegt daher eine hohe Störfestigkeit vor.

Um den Zähler entsprechend einer bestimmten Adresse des Speicherelementes setzen zu können ist es vorteilhaft, daß das Speicherelement Steuersignale für den Zähler enthält und Ausgänge umfaßt, die über Steuerleitungen mit der Ein/Ausschaltsteuerung verbunden sind und daß die Ein/Ausschaltsteuerung über eine Adreßleitung mit dem Zähler verbunden ist. Zur Erhöhung der Störfestigkeit ist im Speicherelement der Beginn der Ausschaltroutine um mehrere Zählerschritte vom Ende der Einschaltroutine getrennt. Somit muß nach der Beendigung der Einschaltroutine ein Störsignal für die gesamte Dauer der leeren Zählerschritte zwischen Ein- und Ausschaltroutine anliegen, um die Ausschaltroutine zu starten.

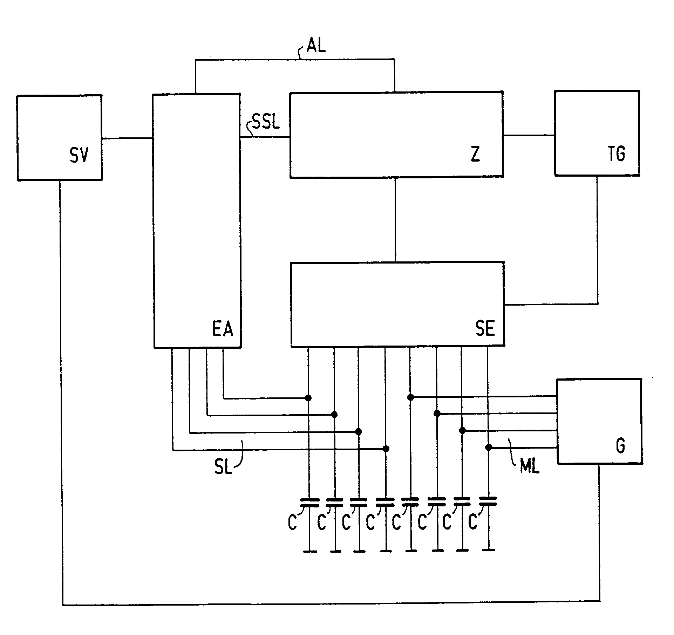

Die Erfindung wird anhand eines Ausführungsbeispieles mit einer Zeichnung näher erläutert. Die Figur zeigt das schematische Blockschaltbild des Ausführungsbeispieles.

In der Figur ist das schematische Blockschaltbild einer Stromversorgungseinrichtung SV eines Gerätes G, beispielsweise eines Rechners der Automatisierungstechnik für industrielle Anwendungen, dargestellt. Die Stromversorgung SV liefert an das Gerät G Meldesignale, die Auskunft über die anliegende Spannung geben. Eine Einschaltroutine sorgt für die Inbetriebnahme des Gerätes G. Mit einer Ausschaltroutine wird es ordnungsgemäß unter Sicherung der Rechnerdaten abgeschaltet.

Die Stromversorgung SV ist mit einer Ein/Ausschaltsteuerung EA verbunden, die über eine Start/Stoppleitung SSL und eine Adreßleitung AL einen Zähler Z freigibt. Von dem Zähler Z wird ein Speicherelement SE angesteuert, das ein programmierter, löschbarer Lesespeicher (EPROM) ist. In diesem Speicherelement SE sind die Zeitabläufe der einzelnen Signale für die Ein- und Ausschaltroutine festgelegt. Jede Routine besteht aus einer Vielzahl von Zählerschritten.

Die Einschaltroutine wird durch den Zähler Z gestartet, und am Ausgang des Speicherelementes SE werden die gespeicherten Meldesignale über Meldeleitungen ML an das Gerät G übertragen. Mit jedem Zählerschritt wird eine Speicheradresse ausgelesen. Nach der Beendigung der Einschaltroutine wird der Zähler Z gesperrt und auf einen Wert gesetzt der einer bestimmten Adresse des Speicherelementes SE entspricht. Wenn der Befehl zum Starten der Ausschaltroutine kommt, wird der Zähler Z freigegeben und zählt von dieser Adresse an weiter. Am Ausgang des Speicherelementes SE liegen nun die Meldesignale mit dem Zeitablauf der Ausschaltroutine an. Mach dem Ende der Ausschaltroutine wird der Zähler Z rückgesetzt und gesperrt. Die Signale zur Steuerung des Zählers Z sind ebenfalls im Speicherelement SE abgelegt und werden über Steuerleitungen SL von der Ein/Ausschaltsteuerung EA über die Adreßleitung AL an den Zähler Z übertragen.

Bei einem fehlerhaften Anlauf wird die Einschaltroutine unterbrochen und der Zähler Z sofort auf die Adresse gesetzt, ab der die Ausschaltroutine gespeichert ist. Er zählt sofort weiter und startet damit die Ausschaltroutine.

Die Genauigkeit der Zeitfolge hängt von einem Taktgeber TG ab, der den Arbeitsrhythmus des Zählers Z und Speicherelementes SE bestimmt. Der Taktgeber TG enthält einen quarzgesteuerten Oszillator als Zeitglied. Während der Adreßänderung am Eingang des Speicherelementes SE befinden sich die Ausgänge in einem undefinierten Zustand. Um diese Zeit zu überbrücken, werden die Ausgänge während dem Umspringen des Zählers Z hochohmig geschaltet. Dies wird durch ausreichend dimensionierte Kondensatoren C erreicht, die mit den Ausgängen des Speicherelementes SE verbunden sind und während des undefinierten Zustandes den vorangegangenen Zustand speichern. Erst bei sicherem Anliegen der Daten am Ausgang wird, falls nötig, der Zustand geändert. Die Meldesignale liegen daher kontinuierlich an und können auch von einem ungetakteten System verarbeitet werden.

Beim Ablauf der Ein- und Ausschaltroutine werden vier Melde signale an das Gerät G übertragen. Die Meldesignale steuern die Datensicherung, die Verzögerungszeit, das Rücksetzen des Rech ners und das Abschalten der Spannung (D̅S̅A̅V̅E̅, D̅S̅A̅D̅, R̅E̅S̅E̅T̅, O̅U̅T̅D̅S̅).

## Patentansprüche

1. Vorrichtung zur Erzeugung und Steuerung von Meldesignalen für mindestens eine Ein- und eine Ausschaltroutine mit mindestens einem die Dauer der Meldesignale steuernden Zeitglied, wobei der Meldesignalerzeuger mit einer Stromversorgungseinrichtung (SV) und über Meldeleitungen (ML) mit einem von der Stromversorgungseinrichtung (SV) zu versorgenden Gerät (G) verbunden ist, **dadurch gekennzeichnet,** daß der Meldesignalerzeuger einen Zähler (Z) enthält, der mit einem Speicherelement (SE) verbunden ist, das die Abfolge der Meldesignale für die Ein- und Ausschaltroutine enthält und Ausgänge umfaßt, an die die Meldeleitungen (ML) angeschlossen sind, daß dem Zähler (Z) eine Ein/Ausschaltsteuerung (EA) über eine Start/Stoppleitung (SSL) vorgeschaltet ist und daß der Zähler (Z) und das Speicherelement (SE) mit einem gemeinsamen Taktgeber (TG) mit Oszillator als Zeitglied verbunden sind.

2. Vorrichtung nach Anspruch 1, **dadurch gekennzeichnet,** daß das Speicherelement (SE) Steuersignale für den Zähler (Z) enthält und Ausgänge umfaßt, die über Steuerleitungen (SL) mit der Ein/Ausschaltsteuerung (EA) verbunden sind und daß die Ein/Ausschaltsteuerung (EA) über eine Adreßleitung (AL) mit dem Zähler (Z) verbunden ist.

3. Vorrichtung nach Anspruch 1 oder 2, **dadurch gekennzeichnet,** daß im Speicherelement (SE) der Beginn der Ausschaltroutine um mehrere Zählerschritte vom Ende der Einschaltroutine getrennt ist.

## Claims

1. Device for the generation and control of indication signals for at least one start/stop routine with at least one timer controlling the duration of the indication signals, the indication signal generator being connected to a power supply unit (SV) and via indication lines (ML) to an apparatus (G) to be supplied by the power supply unit (SV), characterised in that the indication signal generator contains a counter (Z) which is connected to a storage element (SE) which contains the sequence of the indication signals for the start/stop routine and includes outputs to which the indication lines (ML) are connected, that a start/stop control (EA) is connected in series to the counter (Z) via a start/stop line (SSL) and that the counter (Z) and the storage element (SE) are connected to a common clock-pulse generator (TG) with an oscillator as a timer.

2. Device according to claim 1, characterised in that the storage element (SE) contains control signals for the counter (Z) and includes outputs which are connected via control lines (SL) to the start/stop control (EA) and that the start/stop control (EA) is connected via an address line (AL) to the counter (Z).

3. Device according to claim 1 or claim 2, characterised in that the beginning of the stop routine is separated from the end of the start routine by several counter units in the storage element (SE).

## Revendications

1. Dispositif pour produire et commander des signaux d'avis pour au moins une routine de branchement et une routine de coupure, avec au moins un organe de temps commandant la durée des signaux d'avis, le générateur de signaux d'avis étant relié à un bloc d'alimentation en courant (SV) et, par l'intermédiaire de lignes d'avis (ML), à un appareil (G) à alimenter par le bloc d'alimentation (SV), **caractérisé** en ce que le générateur de signaux d'avis contient un compteur (Z), qui est relié à une mémoire (SE), contenant la succession des signaux d'avis pour la routine de branchement et la routine de coupure et comprenant des sorties auxquelles sont reliées les lignes d'avis (ML), en ce qu'une unité de commande de branchement/coupure (EA) est connectée en amont du compteur (Z) au moyen d'une ligne de mise en marche/arrêt (SSL), et en ce que le compteur (Z) et la mémoire (SE) sont reliés à un rythmeur (TG), contenant un oscillateur comme organe de temps.

2. Dispositif selon la revendication 1, **caractérisé** en ce que la mémoire (SE) contient des signaux de commande pour le compteur (Z) et comprend des sorties qui sont reliées à l'unité de commande de branchement/coupure (EA) par l'intermédiaire de lignes de commande (SL), et en ce que l'unité de commande de branchement/coupure (EA) est reliée au compteur (Z) par l'intermédiaire d'une ligne d'adresse (AL).

3. Dispositif selon la revendication 1 ou 2, **caractérisé** en ce que, dans la mémoire (SE), le début de la routine de coupure est séparée de la fin de la routine de branchement par plusieurs pas de compteur.
